## Europäisches Patentamt
## European Patent Office
## Office européen des brevets

(19)

(11) Veröffentlichungsnummer : **0 061 027**
**B1**

(12)

# EUROPÄISCHE PATENTSCHRIFT

(45) Veröffentlichungstag der Patentschrift :
20.02.85

(51) Int. Cl.⁴ : **B 60 J 1/17**

(21) Anmeldenummer : 82101575.7

(22) Anmeldetag : 02.03.82

(54) Scheibenführung und -Abdichtung für eine absenkbare Scheibe in einem Kraftfahrzeug.

(30) Priorität : 19.03.81 DE 3110669

(43) Veröffentlichungstag der Anmeldung :
29.09.82 Patentblatt 82/39

(45) Bekanntmachung des Hinweises auf die Patenterteilung : 20.02.85 Patentblatt 85/08

(84) Benannte Vertragsstaaten :
BE DE FR GB IT SE

(56) Entgegenhaltungen :
EP-A- 0 040 588
DE-A- 2 826 949
DE-A- 2 840 811
DE-A- 2 847 404
DE-B- 2 435 766
DE-B- 2 809 721

(73) Patentinhaber : FORD-WERKE AKTIENGESELL-
SCHAFT
Ottoplatz 2 Postfach 21 03 69
D-5000 Köln 21 (DE)
BE DE IT SE
FORD MOTOR COMPANY LIMITED
Eagle Way
Brentwood Essex CM13 3BW (GB)
GB
FORD FRANCE SOCIETE ANONYME
344 Avenue Napoléon Bonaparte B.P. 307
F-92506 Rueil Malmaison Cedex (FR)
FR

(72) Erfinder : Rest, Heinz
Martin-Luther-Strasse 5
D-5000 Köln 71 (DE)
Erfinder : Giese, Ralf
Am Bruch 1
D-5353 Mechernich-Kommern-Süd (DE)

(74) Vertreter : Ritzkowsky, Harald, Dipl.-Ing.
Ford-Werke Aktiengesellschaft Patentabteilung
Z/DRR-2 Ottoplatz 2
D-5000 Köln 21 (DE)

EP 0 061 027 B1

## Beschreibung

Die Erfindung geht aus von einer Scheibenführung und -Abdichtung für eine absenkbare Scheibe in einem Kraftfahrzeug gemäß dem Oberbegriff des Anspruchs 1.

Aus der DE-B2-2 435 766 ist bereits eine Scheibenführung- und Abdichtung dieser Art bekannt. Die an sich ebene Scheibe wird hierbei an ihren Rändern von nach innen zurückspringende Kanten bildenden Randleisten umfaßt, die mit in der Rahmenöffnung angeordneten Führungs- und Abdichtleisten zusammenwirken.

Diese bekannte Ausführung weist den Nachteil auf, daß die entlang der Ränder der Scheibe umlaufend angeordneten Randleisten bei teilweise abgesenkter Scheibe störend ins Blickfeld der Fahrzeuginsassen gerät. Dieser Nachteil bleibt auch erhalten, wenn, wie vorgeschlagen, die nach innen zurückspringende Kante unmittelbar durch den Werkstoff der Scheibe, also durch das Glas gebildet wird oder die Randleiste nur auf der Innenseite der Scheibe angeklebt ist.

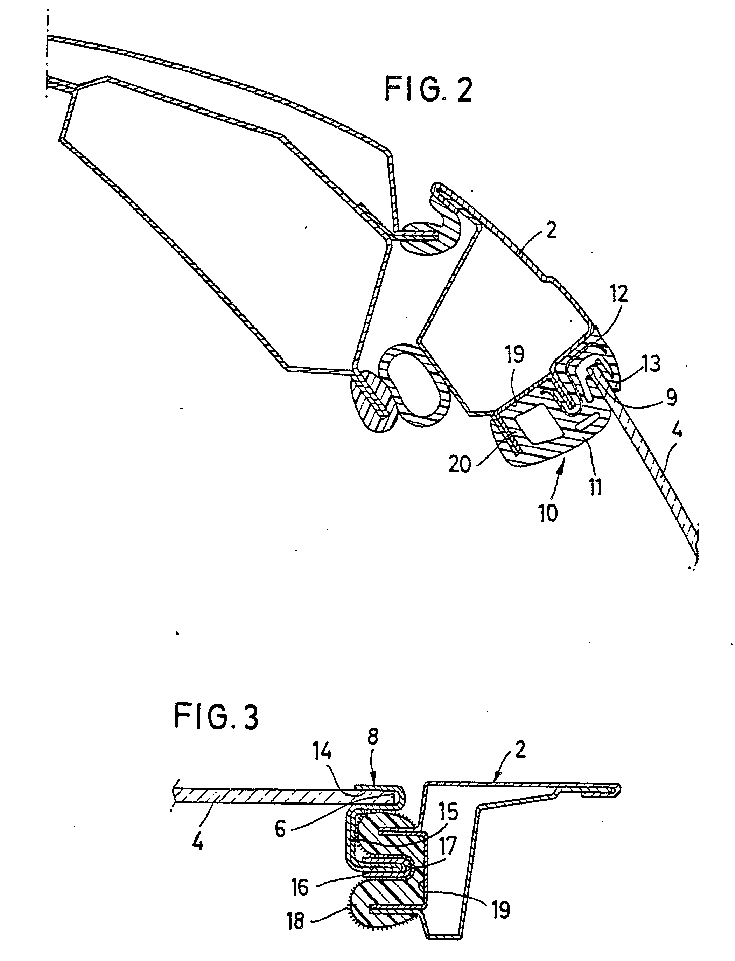

Aus der DE-A1-2 847 404 ist ein Ausführungsbeispiel einer solchen Ausführungsform zu entnehmen. Es ist hierbei aus Fig. 2 leicht zu erkennen, daß auch die aus dem Werkstoff der Scheibe gebildete nach innen zurückspringende Kante bei teilweise abgesenkter Scheibe durch optische Verzerrungen störend wirken wird.

Aus der DE-B1-2 809 721 ist eine Scheibenführung für eine absenkbare Scheibe in einem Kraftfahrzeug bekannt, bei der die Scheibenaußenfläche gleichfalls fluchtend mit der Karosserieaußenfläche verläuft und bei der die Scheibe mit ihrem oberen horizontalen Rand mit einer in der Rahmenöffnung befestigten Abdichtleiste zusammenwirkt. Die hierbei zur Führung und Abdichtung der vertikalen Ränder der Scheibe erforderlichen Führungs- und Abdichtungsleisten werden hierbei durch verhältnismäßig teuere stranggepreßte Aluminiumprofile gebildet.

Aus der DE-A1-2 840 811 ist eine Scheibenführung für eine absenkbare Scheibe in einem Kraftfahrzeug bekannt, die zwar an einem Flansch der Fentsterrahmenöffnung in einfacher Weise aufgesteckte Führungs- und Abdichtleisten aufweist, die jedoch mit unmittelbar an den Scheiben befestigten Führungsteilen zusammenwirken, die entweder über eine Klebeverbindung oder über eine Bolzenverbindung befestigt werden, die beide sowohl von innen als auch von außen störend sichtbar sind.

Aus der DE-A1-2 826 949 Fig. 3 ist eine Scheibenbefestigung für eine nicht absenkbare, feststehende Dreieckscheibe mittels einer Randeinfassung zu entnehmen, die ein S-förmiges Profil aufweist.

Die Aufgabe der Erfindung ist es, ausgehend von dem umfangreichen Stand der Technik eine Scheibenführung und -Abdichtung für eine absenkbare Scheibe in einem Kraftfahrzeug zu schaffen, deren oberer Rand keine störende Beeinflußung der Sichtverhältnisse für die Fahrzeuginsassen mit sich bringt und deren Einzelteile in einfacher Weise an den Scheiben und in der Rahmenöffnung befestigt werden können und die die Scheiben auch bei den bei hohen Fahrgeschwindigkeiten auftretenden Sogkräften zuverlässig halten.

Gemäß der Erfindung wird diese Aufgabe gelöst, indem eine Scheibenführung- und Abdichtung für eine absenkbare Scheibe in einem Kraftfahrzeug, der im Oberbegriff des Anspruchs 1 erläuterten Art die im Kennzeichenteil des Anspruchs 1 aufgezeigten Merkmale aufweist.

In den Ansprüchen 2 und 3 sind hierbei zwei alternative Ausführungsformen der Erfindung erläutert.

Die weiteren Ansprüche 3 bis 8 beziehen sich auf zweckmäßige Ausgestaltungen von Einzelheiten der Scheibenführung- und Abdichtung gemäß der Erfindung.

Dadurch, daß die Scheibe nur an ihren seitlichen, vertikalen Rändern mit Führungsleisten fest verbunden ist und an ihrem oberen geneigten und horizontalen Rand mit einer in der Rahmenöffnung befestigten Abdichtleiste zusammenwirkt, wird bei einer ebenen Scheibe, deren Scheibenebene fluchtend zur Karosserieaußenfläche liegt, bei zuverlässiger Führung und Abdichtung auch ein in optischer Hinsicht einwandfreier oberer Randabschluß erreicht.

Dadurch, daß die an den seitlichen, vertikalen Rändern befestigten Führungsleisten ein S-förmiges Profil aufweisen und mit ihrem engen Abschnitt die vertikalen Kanten der Scheibe umfassen und mit ihren breiten Abschnitten auf der Beflockung bzw. den beflockten Lippen einer an einem Flansch in der Rahmenöffnung aufgesetzten Kantenschutz-Führungsleiste gleiten, wird eine besonders kostengünstige Ausbildung der Rahmenöffnung des die Scheibe aufnehmenden Karosserieteils, z. B. einer Kraftfahrzeugtür ermöglicht, in dem diese nur aus einem einteiligen Innenblech und einem einteiligen Außenblech besteht, die an ihren Außenrändern durch Bördeln und an ihrer Rahmenöffnung durch einen einfachen Punktschweißflansch miteinander verbunden sind.

Dadurch, daß die an den seitlichen, vertikalen Rändern befestigten Führungsleisten ein S-förmiges Profil aufweisen und mit ihrem engen Abschnitt die vertikalen Kanten der Scheibe umfassen und mit dem freien Schenkel ihrer breiten Abschnitte in einer, in einem U-Kanal eingesetzten, beflockten Dichtungs-Führungsleiste gleiten, wird die Anordnung einer ebenen Scheibe mit einer fluchtend zur Karosserieaußenfläche liegenden Scheibenebene auch in Rahmenöffnungen ermöglicht, die in herkömmlicher Weise ein U-Profil zur Aufnahme von herkömmlichen Scheibenanordnungen aufweisen.

Die Erfindung wird anhand zweier in den Zeichnungen erläuterter Ausführungsbeispiele näher erläutert.

Es zeigen :

Figur 1 eine Seitenansicht des oberen Teils einer vorderen Kraftfahrzeugtür mit einer absenkbaren Scheibe gemäß der Erfindung ;

Figur 2  einen Schnitt entlang der Linie II-II in Fig. 1 ;

Figur 3  einen Schnitt entlang der Linie III-III in Fig. 1 ;

Figur 4  einen Schnitt durch eine weitere Ausführungsform der in der oberen Rahmenöffnung befestigten Abdichtleiste

Figur 5  einen Schnitt durch eine bevorzugte Ausführungsform der an den seitlichen, vertikalen Rändern befestigten Führungsleiste und

Figur 6  einen Schnitt ähnlich Fig. 5 durch eine weitere Ausführungsform.

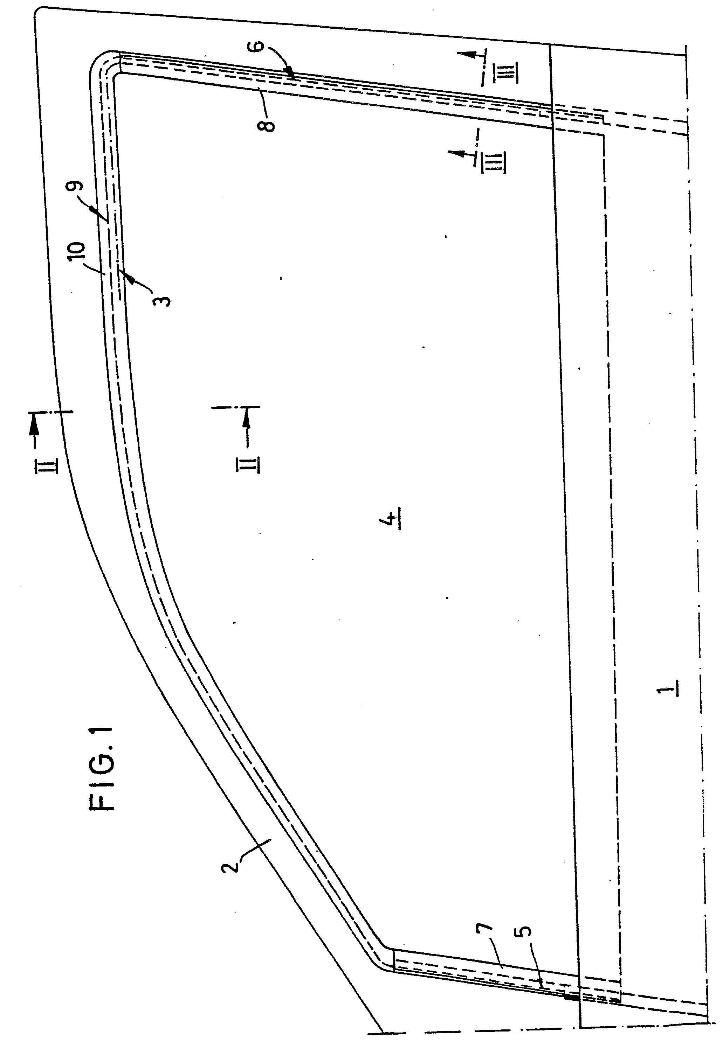

In Fig. 1 weist eine vordere Kraftfahrzeugtür 1 einen Rahmenteil 2 auf. In der Rahmenöffnung 3 ist eine Scheibe 4 absenkbar angeordnet.

Die Scheibe 4 ist hierbei nur an ihren seitlichen, vertikalen Rändern 5 und 6 mit Führungsleisten 7 bzw. 8 fest verbunden. Die Scheibe 4 ist an ihrem oberen, geneigten bzw. horizontalen Rand 9 in bekannter Weise geschliffen und wirkt mit einer oben in der Rahmenöffnung 3 befestigten Abdichtleiste 10 zusammen.

Wie insbesondere aus Fig. 2 zu ersehen ist, besteht die Abdichtleiste 10 aus einem elastischen Abdichtprofil 11, das von einem metallischen Stützprofil 12 verstärkt ist. Das metallische Stützprofil 12 weist hierbei einen S-förmigen Querschnitt auf, um insbesondere die äußere Dichtlippe 13 des elastischen Abdichtprofils 11 abzustützen, um so die Scheibe 4 bei den bei hohen Fahrgeschwindigkeiten auftretenden Sogkräften sicher zu halten.

Wie insbesondere aus Fig. 3 zu entnehmen ist, ist der seitliche vertikale Rand 6 der Scheibe 4 fest mit einer Führungsleiste 8 verbunden. Die Führungsleiste 8 weist ein S-förmiges Profil auf und besteht vorzugsweise aus Metall. Die Führungsleiste 8 weist an ihrem S-förmigen Profil einen engeren Abschnitt 14 und einen weiteren Abschnitt 15 auf. Der engere Abschnitt 14 wird hierbei an der vertikalen Kante 6 der Scheibe 4 vorzugsweise durch Aufklemmen befestigt, wobei eine sichere Klemmbefestigung dadurch erzielt werden kann, daß am Rand 6 der Scheibe 4 in dem vom engen Abschnitt 14 der Führungsleiste 8 umfaßten Bereich Strukturen bzw. Linien aus einem keramischen Material auf die Glasoberfläche aufgesintert sind. Der weitere Abschnitt 15 der Führungsleiste 8 greift mit seinem freien Schenkel 16, der mit einer Kantenleiste 17 versehen sein kann, in eine beflockte Dichtungs-Führungsleiste 18 ein, deren Aufbau bekannten Fensterführungsleisten entspricht und die in bekannter Weise in einem U-förmigen Kanal 19 in der Rahmenöffnung 3 angeordnet wird.

In diesem Zusammenhang wird darauf hingewiesen, daß normalerweise der U-förmige Kanal 19 in der Rahmenöffnung 3 umlaufend angeordnet ist, so daß die im oberen Teil der Rahmenöffnung 3 befestigte Abdichtleiste 11 eine diesen Kanal 19 ausfüllende Fülleiste 20 aufweist.

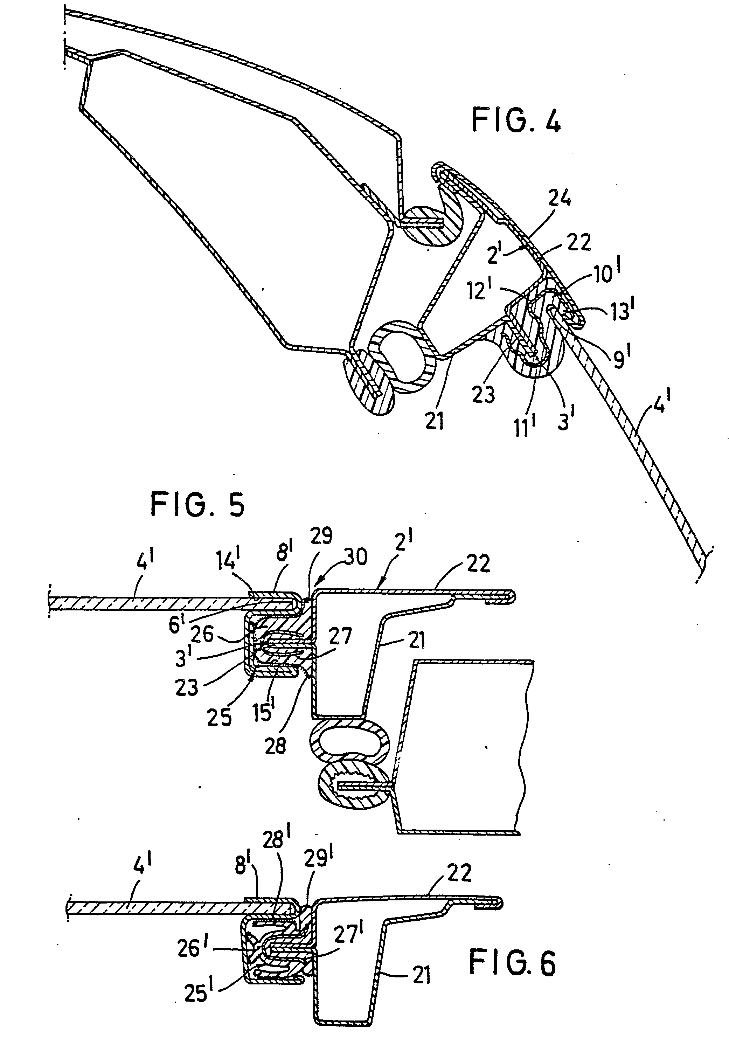

Aus den Figuren 4 und 5 ist eine weitere Ausführungsform der Scheibenführung- und Abdichtung gemäß der Erfindung gezeigt, die eine besonders kostengünstige einfache Ausbildung des die Scheibe 4' umfassenden Rahmenteiles 2' ermöglicht.

Der Rahmenteil 2' kann hierbei aus einem Innenblech 21 und einem Außenblech 22 gebildet werden, die entlang eines in der Rahmenöffnung 3' verlaufenden Punktschweißflansch 23 miteinander verbunden sind.

Aus Fig. 4 ist hierbei die Ausbildung der im oberen Teil der Rahmenöffnung 3' befestigten Abdichtleiste 10' für den oberen, geneigten bzw. horizontalen Rand 9' der Scheibe 4' zu ersehen.

Die Abdichtleiste 10' besteht wieder aus einem elastischen Abdichtprofil 11' und einem metallischen Stützprofil 12' sowie einer äußeren Dichtlippe 13'. Da hierbei die äußere Dichtlippe 13' unmittelbar von außen sichtbar ist, kann sie, wie in Fig. 4 gezeigt, von einer Blende 24 übergriffen werden, die den oberen Rahmenteil 2' mit übergreift.

Aus Fig. 5 ist die Ausbildung der am hinteren Rand 6 der Scheibe 4' befestigten Führungsleiste 8' zu entnehmen. Die Führungsleiste 8' besitzt wieder ein S-förmiges Profil mit einem engen Abschnitt 14' und einem weiteren Abschnitt 15'. Der engere Abschnitt 14' ist wieder, wie in Zusammenhang mit den Figuren 1 bis 3 erläutert, auf dem Rand 6' der Scheibe 4' durch Aufklemmen befestigt. Der weitere Abschnitt 15' umfaßt hierbei eine beflockte Kantenschutz-Führungsleiste 25, die auf dem Schweißflansch 23 der Rahmenöffnung 3' befestigt ist.

Die beflockte Kantenschutz-Führungsleiste 25 bzw. 25' kann in bekannter Weise aus einem elastischen Abdichtprofil 26 bzw. 26' und einem metallischen Stützprofil 27 bzw. 27' bestehen. Das wesentliche an dieser Kantenschutz-Führungsleiste 25 ist hierbei die äußere Beflockung 28 bzw. die beflockten Lippen 28', die mit dem weiteren Abschnitt 15' der Führungsleiste 8' als Gleitführung zusammenwirken. Die Kantenschutz-Führungsleiste 25 bzw. 25' weist weiterhin eine vorspringende Füllkante 29 bzw. 29' auf, um den Spalt 30 zwischen dem Rand der Führungsleiste 8' und dem benachbarten Rahmenteil 2' aufzufüllen.

Selbstverständlich ist die Kraftfahrzeugtür bzw. deren Rahmen gegenüber der Karosserieöffnung über entsprechende Kantenschutz-Abdichtleisten abgedichtet, die jedoch, da sie nicht zur Erfindung gehören, nicht näher erläutert wurden.

## Ansprüche

1. Scheibenführung und -Abdichtung für eine absenkbare Scheibe in einem Kraftfahrzeug, deren Scheibenebene fluchtend zur Karosserieaußenfläche liegt und die an ihren Rändern mit nach innen zurückspringenden Kanten bildenden Führungsleisten (7, 7' und 8, 8') verbunden ist, die mit in der Fensterrahmenöffnung angeordneten Führungs-Abdichtleisten (25, 25', 18) zusammenwirken, dadurch gekennzeichnet, daß

a) die Scheibe (4) an ihrem oberen, geneigten und horizontalem Rand (9) mit einer in der Rahmenöffnung (3) befestigten Abdichtleiste (10) zusammenwirkt, daß

b) die an den seitlichen vertikalen Rändern der Scheibe (5, 5′ und 6, 6′) befestigten Führungsleisten (7, 7′ und 8, 8′) ein S-förmiges Profil aufweisen und mit ihrem ersten engeren Abschnitt (14, 14′) die vertikalen Rändern (5, 5′ und 6, 6′) der Scheibe (4′) umfassen, daß

c) die Führungs- und Abdichtleisten (25, 25′, 18) auf mindestens einen Flansch (23) des Fensterrahmens gesteckt und daß

d) die Führungs- und Abdichtleisten (25, 25′, 18) führend und abdichtend mit dem zweiten breiteren Abschnitt (15, 15′) des S-förmigen Profils in Eingriff stehen.

2. Scheibenführung nach Anspruch 1, dadurch gekennzeichnet, daß die an den seitlichen vertikalen Rändern der Scheibe (5′ und 6′) befestigen Führungsleisten (7′ und 8′) mit dem zweiten, breiteren Abschnitt (15′) des S-förmigen Profils auf den mit einer Beflockung (28) bzw. beflockten Lippen (28′) versehenen Führungs- und Abdichtungsleisten (25 bzw. 25′) gleiten.

3. Scheibenführung nach Anspruch 1, dadurch gekennzeichnet, daß die an den seitlichen vertikalen Rändern der Scheibe (5 und 6) befestigten Führungsleisten (7 und 8) mit den freien Schenkeln (16) der zweiten breiteren Abschnitte (15) des S-förmigen Profils in U-förmigen Kanälen der beflockten Führungs- und Abdichtungsleisten (18) gleiten, die in U-förmigen Kanälen (19), die durch zwei Flansche der Fensterrahmenöffnung gebildet werden, eingesetzt sind.

4. Scheibenführung nach Anspruch 1 und Anspruch 2 oder Anspruch 3, dadurch gekennzeichnet, daß die im oberen Rahmenteil (2 bzw. 2′) befestigte Abdichtleiste (10 bzw. 10′) aus einem elastischen Abdichtprofil (11 bzw. 11′) und einem metallischen Stützprofil (12 bzw. 12′) besteht, und eine äußere Dichtlippe (13 bzw. 13′) aufweist, die die Scheibe (4 bzw. 4′) von außen her abstützt.

5. Scheibenführung nach den Ansprüchen 1, 2 und 3, dadurch gekennzeichnet, daß die Führungsleisten (7 und 8 bzw. 7′ und 8′) mit ihren engeren Abschnitten (14 bzw. 14′) an den vertikalen Rändern (5 und 6 bzw. 5′ und 6′) der Scheibe (4 bzw. 4′) durch Aufklemmen befestigt sind, wobei die Ränder der Scheibe (4 bzw. 4′) in diesen Bereichen mit Linien oder Strukturen aus gesintertem keramischen Material versehen sind.

6. Scheibenführung nach den Ansprüchen 1 und 2, dadurch gekennzeichnet, daß die Kantenschutz-Führungsleisten (25 bzw. 25′) aus einem elastischen Führunsgprofil (26 bzw. 26′) und einem metallischen Stützprofil (27 bzw. 27′) bestehen, eine an sich bekannte äußere Beflockung (28) oder beflockte Lippen (28′) aufweisen und mit einer Fülleiste (29 bzw. 29′) versehen sind.

7. Scheibenführung nach den Ansprüchen 1 und 2 oder 3, dadurch gekennzeichnet, daß die äußere Dichtlippe (13′) durch eine das Türaußenblech (22) übergreifende Blende (24) versteift und abgedeckt ist.

8. Scheibenführung nach den Ansprüchen 1, 2 und 3, dadurch gekennzeichnet, daß die Führungsleisten (7, 7′ und 8, 8′) durch ihr S-förmiges Profil dünne Glasscheiben (4, 4′) in den Führungs-Randbereichen verstärken.

## Claims

1. A pane-guiding and sealing arrangement for a lowerable window pane in a motor vehicle, with the window pane lying flush with the outer surface of the vehicle body and joined at its edges to guide strips (7, 7′ and 8, 8′) forming inwardly projecting borders, the guide strips cooperating with guiding- and sealing strips (25, 25′, 18) positioned in the window frame opening, characterized in that

a) the pane (4) cooperates at its upper, sloping and horizontal edge (9) with a sealing strip (10) fixed in the window frame opening (3),

b) the guide strips (7, 7′ and 8, 8′) fixed to the lateral vertical edges (5, 5′ and 6, 6′) of the pane have an S-shaped profile and grip the vertical edges (5, 5′ and 6, 6′) of the pane (4′) with their first, narrower section (14, 14′),

c) the guiding- and sealing strips (25, 25′, 18) are stuck onto at least one flange (23) of the window frame, and

d) the guiding- and sealing strips (25, 25′, 18) are in guiding and sealing engagement with the second, wider section (15, 15′) of the S-shaped profile.

2. A pane-guiding arrangement according to claim 1, characterized in that the guide strips (7′ and 8′) attached to the lateral, vertical edges (5′ and 6′) of the pane slide with the second, wider section (15′) of the S-shaped profile on the guiding- and sealing strips (25 or 25′) provided with flocks (28) or flocked lips (28′).

3. A pane-guiding arrangement according to claim 1, characterized in that the guide strips (7 and 8) attached to the lateral, vertical edges (5 and 6) of the pane slide with the free legs (16) of the second, wider sections (15) of the S-shaped profile in U-shaped channels of the flock-covered guiding- and sealing strips (18), inserted in U-shaped channels (19) formed by two flanges in the window frame opening.

4. A pane-guiding arrangement according to claim 1 and claim 2 or claim 3, characterized in that the sealing strip (10 or 10′), fixed in the upper part (2 or 2′) of the window frame, consists of a resilient sealing profile (11 or 11′) and a metallic bracing profile (12 or 12′) and has an outer sealing lip (13 or 13′) which supports the pane (4 or 4′) from the outside.

5. A pane-guiding arrangement according to claims 1, 2 and 3, characterized in that the guide strips (7 and 8, or 7′ and 8′) are fixed with their narrower sections (14 or 14′) to the vertical edges (5 and 6 or 5′ and 6′) of the pane (4 or 4′) by clamping, the edges of the pane (4 or 4′) being provided in these areas with linings or structures of sintered ceramic material.

6. A pane-guiding arrangement according to claims 1 and 2, characterized in that the edge-protecting guiding strips (25 or 25') consist of a resilient guide profile (26 or 26') and a metallic bracing profile (27 or 27'), have an outer flock-covering (28) or flocked lips (28') known as such and are fitted with a packing strip (29 or 29').

7. A pane-guiding arrangement according to claims 1 and 2 or 3, characterized in that the outer sealing lip (13') is stiffened and covered by a shield (24) overlapping the weatherstrip (22).

8. A pane-guiding arrangement according to claims 1, 2 and 3, characterized in that thin glass panes (4, 4') are reinforced along their guided edges by the S-shaped profile of the guide strips (7, 7' and 8, 8').

**Revendications**

1. Dispositif de guidage et d'étanchéité pour vitre de véhicule automobile à mouvement vertical, le plan de cette vitre étant disposé de niveau avec la surface extérieure de la carrosserie, tandis que sur ses bords sont fixées des garnitures de guidage (7, 7' et 8, 8') qui constituent des bordures en retrait vers l'intérieur et qui coopèrent avec des garnitures d'étanchéité et guidage (25, 25', 18) disposées dans l'ouverture du cadre de fenêtre, caractérisé en ce que

a) la vitre (4) coopère par son bord supérieur, incliné et horizontal (9) avec une garniture d'étanchéité (10) fixée dans l'ouverture de cadre (3),

b) les garnitures de guidage (7, 7' et 8, 8') fixées sur les bords latéraux verticaux de la vitre (5, 5' et 6, 6') comprennent un profilé en forme de S et enserrent par leurs premières sections, étroites, (14, 14'), les bords verticaux (5, 5' et 6, 6') de la vitre (4'),

c) les garnitures de guidage et d'étanchéité (25, 25', 18) sont engagées sur au moins une aile (23) du cadre de fenêtre et

d) les garnitures de guidage et d'étanchéité (25, 25', 18) s'engagent, de manière à la guider et de façon étanche, sur la seconde section, large, (15, 15') du profilé en forme de S.

2. Dispositif de guidage de vitre selon la revendication 1, caractérisé en ce que les garnitures de guidage (7') et (8') fixées sur les bords latéraux verticaux de la vitre (5' et 6') glissent, par la seconde section, large, (15') du profilé en forme de S, sur les garnitures de guidage et d'étanchéité (25 ou 25') munies d'un flocage (28) ou de lèvres floquées (28').

3. Dispositif de guidage de vitre selon la revendication 1, caractérisé en ce que les garnitures de guidage (7 et 8) fixées sur les bords latéraux verticaux de la vitre (5 et 6) glissent, par les ailes libres (16) des secondes sections, larges, (15) des profilés en forme de S, dans des canaux en forme de U des garnitures floquées de guidage et d'étanchéité (13) qui sont logées dans des canaux en forme de U (19) qui sont délimités par deux ailes de l'ouverture de cadre de fenêtre.

4. Dispositif de guidage de vitre selon la revendication 1 et la revendication 2 ou la revendication 3, caractérisé en ce que la garniture d'étanchéité (10 ou 10') fixée dans la partie supérieure de cadre (2 ou 2') est constituée par un profilé élastique d'étanchéité (11 ou 11') et une âme métallique (12 ou 12'), et comporte une lèvre extérieure d'étanchéité (13 ou 13') qui s'appuie, à partir de l'extérieur, sur la vitre (4 ou 4').

5. Dispositif de guidage de vitre selon les revendications 1, 2 et 3, caractérisé en ce que les garnitures de guidage (7 et 8 ou 7' et 8') sont fixées par pincement de leurs sections étroites (14 ou 14') sur les bords verticaux (5 et 6) ou (5' et 6') de la vitre (4 ou 4'), les bords de cette vitre (4 ou 4') étant munis dans ces zones, de lignes ou de motifs en matière céramique frittée.

6. Dispositif de guidage de vitre selon les revendications 1 et 2, caractérisé en ce que les garnitures de guidage et de protection de bordure (25 ou 25') sont constituées par un profilé élastique de guidage (26 ou 26') et une âme métallique d'appui (27 ou 27'), et en ce qu'elles comportent un flocage extérieur (28) ou des lèvres floquées (28') connues en soi, et sont munies d'un bourrelet de remplissage (29 ou 29').

7. Dispositif de guidage de vitre selon les revendications 1 et 2 ou 3, caractérisé en ce que la lèvre extérieure d'étanchéité (13') est renforcée et recouverte par un cache (24) s'étendant par-dessus la tôle extérieure de portière (22).

8. Dispositif de guidage de vitre selon les revendications 1, 2 et 3, caractérisé en ce que les garnitures de guidage (7, 7' et 8, 8') renforcent, grâce à leurs profilés en forme de S, des vitres en verre mince (4, 4'), et ceci dans leurs zones de bords de guidage.

FIG.1

FIG. 2

FIG. 3

FIG. 4

FIG. 5

FIG. 6